## Europäisches Patentamt
## European Patent Office
## Office européen des brevets

(19)

(11) Veröffentlichungsnummer: **0 529 244 B1**

(12)

# EUROPÄISCHE PATENTSCHRIFT

(45) Veröffentlichungstag der Patentschrift: **06.12.95**

(51) Int. Cl.6: **B62D 6/04**, B62D 7/15, B62D 37/02, G01P 5/14

(21) Anmeldenummer: **92111372.6**

(22) Anmeldetag: **04.07.92**

(54) **Aufnehmer zur Erfassung von Seitenwindeinflüssen auf ein Fahrzeug.**

(30) Priorität: **22.08.91 DE 4127726**

(43) Veröffentlichungstag der Anmeldung:
**03.03.93 Patentblatt 93/09**

(45) Bekanntmachung des Hinweises auf die
Patenterteilung:
**06.12.95 Patentblatt 95/49**

(84) Benannte Vertragsstaaten:
**DE FR GB IT**

(56) Entgegenhaltungen:
**EP-A- 0 408 886**
**DE-B- 1 108 091**
**DE-C- 3 816 057**

**PATENT ABSTRACTS OF JAPAN vol. 10, no. 250 (P-491)28. August 1986 & JP-A-61 077 766 ( TOYOTA ) 21 April 1986**

**PATENT ABSTRACTS OF JAPAN vol. 13, no. 294 (P-894)7. Juli 1989 & JP-A-01 075 983 ( NISSAN ) 22 März 1989**

(73) Patentinhaber: **Dr.Ing.h.c. F. Porsche Aktien-gesellschaft**
**Porschestrasse 42**
**D-70435 Stuttgart (DE)**

(72) Erfinder: **Jacobi, Stefan**
**Hirschstrasse 33**
**W-7032 Sindelfingen (DE)**
Erfinder: **Berkefeld, Volker, Dr.**
**Zimmeräckerstrasse 25**
**W-7253 Renningen (DE)**

EP 0 529 244 B1

## Beschreibung

Die Erfindung betrifft einen Aufnehmer zur Erfassung von Seitenwindeinflüssen für ein Fahrzeug.

Beim Durchfahren einer Seitenwindböe werden Fahrzeuge ohne Lenkkorrektur mehr oder weniger seitlich versetzt und aus dem Wind herausgedreht. Das Fahrzeug weist somit auf einer sich daran anschließenden seitenwindfreien Fahrstrecke eine stationäre Kursabweichung auf. Die Größe des seitlichen Versatzes beziehungsweise der Richtungsänderung hängt neben der Windstärke und der Richtung des Winds relativ zur Fahrtrichtung des Fahrzeugs von der Fahrgeschwindigkeit des Fahrzeugs und dessen Geometrie ab und ist daher von Fahrzeug zu Fahrzeug verschieden.

Die Auswirkung des Seitenwindeinflusses auf ein Fahrzeug wird daher in der Regel schon bei dessen Konstruktion berücksichtigt und durch entsprechende Maßnahmen so gering wie möglich gehalten. Aus physikalischen Gründen ist es jedoch nicht möglich, den Einfluß des Seitenwinds auf das Fahrverhalten des Fahrzeugs allein durch konstruktive Maßnahmen gänzlich zu beseitigen.

Es wurde daher bereits versucht, die Beeinflussung des Fahrverhaltens eines Fahrzeugs durch Seitenwind weiter zu verringern, in dem diese sensorisch erfaßt und mittels eines Stellglieds entweder eine Achse des Fahrzeugs relativ zu diesem oder den Lenkwinkel der Räder der Achse gezielt verstellt.

Aus der DE-PS 11 08 091 ist eine dahingehend arbeitende Vorrichtung bekannt. Über je einen Druckabnahmepunkt auf beiden Fahrzeugseiten führen pneumatische Leitungen zu Kammern beidseitig einer Membrane eines pneumatischen Stellelements. Das pneumatische Stellelement betätigt ein hydraulisches Ventil, mit dem ein Stellglied angesteuert ist. Das Stellglied mit einer federbelasteten Mittellage verschiebt in einer ersten Ausführung die Aufhängepunkte einer Achse des Fahrzeugs relativ gegenüber der Karosserie, oder verstellt in einer zweiten Ausführung den Lenkwinkel der Räder dieser Achse.

Die Wirkung der Druckdifferenz auf den Lenkwinkel ist bei dieser bekannten Vorrichtung aber fest vorgegeben (weitgehend proportional zur Druckdifferenz) und daher aus fahrdynamischer Sicht nicht optimal. Ebenso wirkt sich jede Störung in der anströmenden Luft unmittelbar auf den Lenkwinkel aus.

Mit der DE 38 16 057 C1 ist eine Vorrichtung zur Bestimmung von Seitenwindeinflüssen an einem Fahrzeug bekannt geworden. Am Fahrzeug sind insgesamt sechs Drucksonden angeordnet, deren Druckwerte in aufwendiger Weise miteinander verknüpft werden.

Die Verknüpfung der Druckwerte erfordert jedoch einen relativ hohen Rechenaufwand. Da zudem wenigstens teilweise Absolutdruckwerte benötigt werden, müssen alle Sensoren, um weniger aufwendige Differenzdrucksensoren verwenden zu können, einseitig mit einer Referenzdruckkammer verbunden werden, die über eine Drosselstrecke mit der Atmosphäre zu verbinden ist.

Die JP-A-61 077 766 zeigt eine Warneinrichtung für Seitenwind, bei der an beiden Fahrzeugseiten auf der Karosserieaußenhaut Druckabnahmepunkte angebracht und mit einem Differenzdruckaufnehmer verbunden sind. Das vom Differenzdruckaufnehmer abgegebene Signal wird verstärkt und dem Fahrer angezeigt. Der Fahrer kann hiermit erkennen, aus welcher Richtung der Seitenwind kommt und wie stark er sich ändert, um daraufhin selbständig Korrekturen einleiten zu können.

Aus der EP 0 408 886 A2 ist eine Vorrichtung zur Bestimmung von Seietnwindeinflüssen an Fahrzeugen bekannt, bei der Differenzdrucksensoren den Differenzdruck zwischen einem in Fahrzeuglängsrichtung angeordneten Druckabnahmepunkt (Staudruck) und einem an der Fahrzeugseite anliegenden Luftdruck erfassen. Aus diesen Differenzdrücken wird dann der Differenzenquotient bestimmt und hieraus der Einfallswinkel des Seitenwindes ermittelt. Mit Hilfe des Einfallswinkels, einer der Druckdifferenzen sowie einem Beiwert ist es dann möglich, die Größe des auf das Fahrzeug wirkenden Seitenwind-Staudruckes zu berechnen.

Es ist Aufgabe der Erfindung, einen Aufnehmer zur Erfassung von Seitenwindeinflüssen für ein Fahrzeug zu schaffen, der mit einem verhältnismäßig geringen meßtechnischen Aufwand den Seitenwind- Einfluß auf ein Fahrzeug zu ermitteln und eine durch nachgeschaltete Steuergeräte leicht weiterverarbeitbare Größe zu erzeugen vermag.

Die Erfindung ist durch die Merkmale des Anspruchs 1 gelöst. Weitere, die Erfindung in vorteilhafter Weise ausgestaltende Merkmale sind den Unteransprüchen zu entnehmen.

Die Vorteile der Erfindung sind in erster Linie darin zu sehen, daß ein Aufnehmer zur Erfassung von Seitenwindeinflüssen für ein Fahrzeug geschaffen ist, der mit einem verhältnismäßig geringen meßtechnischen Aufwand zur Erfassung des Seitenwind- Einflusses auskommt. Der Aufnehmer erzeugt darüber hinaus leicht weiterverarbeitbare Ausgangsgrößen, die beispielsweise in einem nachgeschalteten Steuergerät zur Steuerung eines Lenkelements des Fahrzeugs in Abhängigkeit vom Seitenwindeinfluß herangezogen werden kann.

Zur Erfassung des Seitenwind- Einflusses, d. h. der auf das Fahrzeug wirkenden Windseitenkraft wird lediglich ein einziger Differenzdruckaufnehmer benötigt, welcher über möglichst gleichlange Schläuche oder Leitungen mit zwei Druckabnahmepunkten an der Fahrzeugkarosserie zu verbinden ist. Die Druckabnahmepunkte liegen symmetrisch zur senkrecht verlaufenden Längsebene des Fahrzeugs an dessen Vorbau, beispielsweise an den Vorderkotflügeln. Sie werden in einen Bereich der Karosserieaußenhaut gelegt, der frei von Turbulenzen ist, und an dem sich die Strömung auch unter ungünstigen Anströmbedingungen nicht ablöst.

Der Aufnehmer erfaßt ein Einfahren in eine / ein Ausfahren aus einer Seitenwindböe, in dem die erfaßten Werte des Differenzdrucks exponentiell geglättet und jeweils aus der Differenz zweier nacheinander erfaßter Werte des geglätteten Differenzdrucks ein Ansteigen oder ein Abfallen des Differenzdrucks ermittelt wird.

Die Erfindung wird nachstehend anhand der in den Zeichnungen dargestellten Ausführungsbeispiele näher erläutert.

Es zeigt:

Fig. 1 ein Schemabild eines Fahrzeugs,

Fig. 2 ein Vektordiagramm mit einem aus Windgeschwindigkeits- und Fahrgeschwindigkeitsvektor resultierenden Summenvektor,

Fig. 3 ein Flußdiagramm zur Bestimmung einer Windseitenkraft.

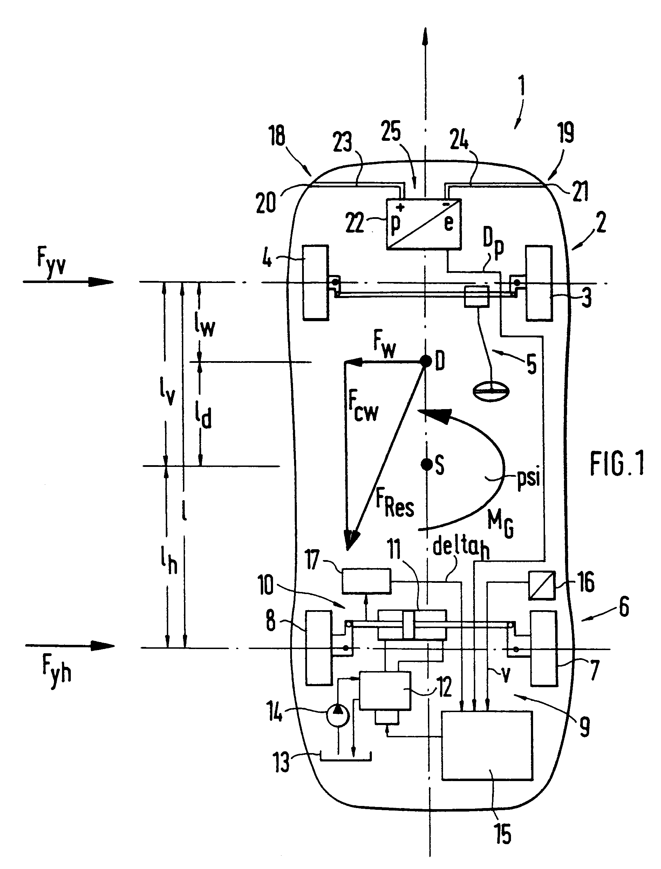

In **Fig. 1** ist mit 1 ein zweiachsiges Fahrzeug gezeigt, dessen erste Achse 2 bzw. deren Räder 3, 4 über eine erste Lenkvorrichtung 5 willkürlich durch einen Fahrzeugführer lenkbar ist. In für die Erfindung nicht notwendiger Weise kann eine zweite Achse 6 des Fahrzeugs 1 relativ gegenüber den Punkten ihrer Anbindung an der Karosserie des Fahrzeugs 1 / die Räder 7, 8 der Achse 6 in ihrem Lenkeinschlag (Hinterachslenkwinkel $delta_h$) in Abhängigkeit von Betriebsparametern 9 des Fahrzeugs 1 über eine zweite Lenkvorrichtung 10 verschiebbar / steuerbar sein. Die zweite Lenkvorrichtung 10 ist hierzu mit einem hilfskraftbetätigten Stellglied 11 zur Einstellung eines bestimmten Hinterachslenkwinkels $delta_h$ ausgestattet. Das Stellglied 11 arbeitet ohne Einschränkung der Allgemeinheit mit hydraulischem Hilfskraftmedium, das dem Stellglied 11 über einen elektromagnetisch betätigten Ventilblock 12 zugeführt oder über diesen vom Stellglied 11 in ein Vorratsgefäß 13 abgeführt wird. Dem Ventilblock 12 wird schließlich über eine Pumpe 14 aus dem Vorratsgefäß 13 Hydraulikmedium zugeführt.

Der Ventilblock 12 wird über ein Steuergerät 15, das vorzugsweise einen Digitalrechner (Mikrorechner) umfaßt, in Abhängigkeit von den Betriebsparametern 9 des Fahrzeugs 1, zu denen unter anderem auch eine mittels eines Fahrgeschwindigkeitsgebers 16 erfaßte Fahrgeschwindigkeit v des Fahrzeugs zählt, gesteuert. Zur exakten Einstellung des Hinterachslenkwinkels $delta_h$ kann das Steuergerät 15 einen unterlagerten Stellregelkreis umfassen, wozu der Hinterachslenkwinkel $delta_h$ über einen Hinterachslenkwinkelgeber 17 erfaßt und dem Steuergerät 15 zugeführt wird.

Zur Bestimmung des sich auf das Fahrverhalten des Fahrzeugs auswirkenden Einflusses von Seitenwind sind gegenüberliegend an den Seiten des Fahrzeugs 1 Durckabnahmepunkte 18 und 19 angeordnet. An den Druckabnahmepunkten 18 und 19 wird der im Bereich der Karosserieaußenhaut anstehende Luftdruck gemessen.

Die Druckabnahmepunkte 18 und 19 sind als Bohrungen 20 und 21 ausgeführt. Ein den Differenzdruck Dp zwischen beiden Druckabnahmepunkten 18, 19 erfassender Differenzdruckaufnehmer 22 ist zentral zwischen diesen angeordnet und über möglichst gleich lange Schläuche oder Rohrleitungen 23, 24 mit diesen verbunden.

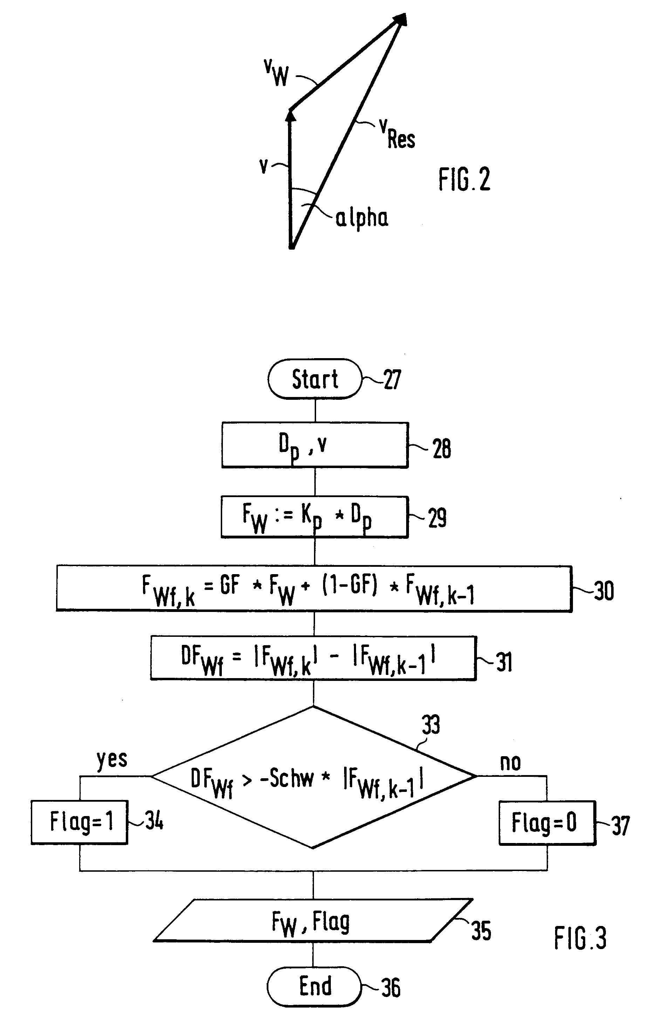

Gemäß **Fig. 1** greift eine Windseitenkraft $F_W$ auch bei von Null verschiedenen Schiebewinkeln alpha nach **Fig. 2** in einem Druckpunkt D des Fahrzeugs 1 nach **Fig. 1** an. Der Schiebewinkel alpha ist im Vektordiagramm nach **Fig. 2** als Winkel zwischen dem Fahrgeschwindigkeitsvektor v und dem resultierenden Summenvektor $v_{Res}$ aus Fahrgeschwindigkeitsvektor v und Windgeschwindigkeitsvektor $v_W$ eingezeichnet.

Die Windseitenkraft $F_W$ zeigt immer senkrecht zur Fahrzeuglängsachse in Richtung auf die windabgewandte Seite des Fahrzeugs und läßt sich berechnen gemäß

$$F_W = 0,5 \cdot ro \cdot v_{Res}^2 \cdot c_s \cdot A_f, \qquad \text{(Gl. 1)}$$

mit:

ro   Luftdichte,

$v_{Res}$   Anströmgeschwindigkeit der Luft,

$c_s$   Seitenkraftbeiwert des Luftwiderstands des Fahrzeugs,

$A_f$   Fahrzeugstirnfläche.

In Versuchen hat sich gezeigt, daß bei geeigneter Wahl der Lage der Druckbohrungen die Windseitenkraft $F_W$ näherungsweise proportional zu dem vom Differenzdruckaufnehmersystem 25 gemessenen Differenzdruck Dp ist.

Wird die Windseitenkraft $F_W$ auf diese weise bestimmt, muß der Schiebewinkel alpha nicht bekannt sein. Zum Erreichen guter Meßergebisse ist das Differenzdruckaufnehmersystem 25 aus Differenzdruckaufnehmer 22, Druckaufnahmepunkte 18, 19 bzw. Bohrungen 20, 21 und Leitungen 23, 24 (und Steuergerät 15) nach den folgenden Richtlinien anzuordnen:

- Die Druckaufnahmepunkte 18, 19 sollten symmetrisch zur senkrecht verlaufenden Längsebene des Fahrzeugs an dessen Vorderbau, vorzugsweise am linken und rechten Vorderkotflügel (nicht gezeigt) angeordnet sein.

- Die Druckaufnahmepunkte 18, 19 sollten derartig am Fahrzeug 1 angeordnet werden, daß sie selbst bei großen Beträgen des Schiebewinkels alpha zwischen Fahrzeugslängsachse und des Summenvektors $v_{Res}$ aus dem Fahrgeschwindigkeitsvektor v und dem Windgeschwindigkeitsvektor $v_W$ gemäß **Fig. 2** nicht in Gebieten abgelöster Luftströmung liegen.

- Das Druckaufnehmersystem soll derart abgestimmt sein, daß es an der Karosserieoberfläche im Bereich der Druckabnahmepunkte 18, 19 auftretende Druckschwankungen in einem Frequenzbereich von 0 Hz bis etwa 5 Hz nur unwesentlich verfälscht durch Absorbtion, Reflektion und Resonanzen aufnimmt.

Bei der Simulation einer Vorbeifahrt eines Fahrzeugs an einer Seitenwindböe hat sich gezeigt, daß sich das Einfahren in eine und das Ausfahren aus einer Seitenwindböe unterschiedlich auf das Fahrverhalten des Fahrzeugs auswirkt.

Erfindungsgemäß erfaßt daher eine dem Differenzdruckaufnehmer nachgeschaltete Rechenschaltung, die im gegebenen Fall dem Steuergerät 15 zugeordnet ist, aus den Werten des gemessenen Differenzdrucks Dp die Einfahrt des Fahrzeugs in eine und die Ausfahrt aus einer Seitenwindböe, und erzeugt in Abhängigkeit davon ein diese Zustände charakterisierendes Schaltsignal oder entsprechende Entscheidungszustände zur weiteren Veranlassung.

Zur Erfassung des Einfahrens in eine oder des Ausfahrens aus einer Seitenwindböe filtert die Rechenschaltung im Steuergerät 15 die Werte der berechneten Windseitenkraft $F_{W,k}$ oder die erfaßten Werte des Differenzdrucks Dp mit einem Tiefpaß (gefilterte Windseitenkraftwerte $F_{Wf,k}$), beispielsweise entsprechend einem PT-1-Algorithmus (exponentielle Glättung) und bildet die Differenz $DF_{Wf} = |F_{Wf,k}| - |F_{Wf,k-1}|$ der Beträge der zum augenblicklichen Zeitpunkt (Rechendurchlauf k) und zum Zeitpunkt der letzten Berechnung (Rechendurchlauf k-1) bestimmten gefilterten Windseitenkraftwerte $|F_{Wf,k}|$, $|F_{Wf,k-1}|$.

Die Rechenschaltung vergleicht die Differenz $DF_{Wf}$ mit einem windseitenkraftabhängigen Schwellwert $-Schw^*|F_{Wf,k-1}|$ und erkennt ein Einfahren in die Seitenwindböe, sofern die Differenz $DF_{Wf}$ der gefilterten Windseitenkraftwerte größer als der windseitenkraftabhängige Schwellwert ist: $DF_{Wf} > -Schw^*|F_{Wf,k-1}|$. Ein Ausfahren aus der Seitenwindböe wird von der Rechenschaltung 15 erkannt, sofern die Differenz $DF_{Wf}$ der gefilterten Windseitenkraftwerte kleiner als der windseitenkraftabhängige Schwellwert ist: $DF_{Wf} < -Schw^*|F_{Wf,k-1}|$. Die Tiefpaß-Filterung der Windseitenkraftwerte $F_W$ erfolgt vorzugsweise mit einer Eckfrequenz im Bereich von ca. 0,2 Hz.

Mit den so gewonnenen Windseitenkraftwerten und dem Schaltsignal oder dem Entscheidungszustand kann somit beispielsweise die Minimierung des Seitenwindeinflusses auf das Fahrverhalten eines Fahrzeugs betrieben werden.

In **Fig. 3** ist ein Diagramm zur Bestimmung der Windseitenkraft gezeigt. Auf der Basis dieses Flußdiagramms kann ein entsprechendes Unterprogramm erstellt und beispielsweise in ein Stellprogramm für eine Hinterachslenkung eingebunden werden.

Nach dem Programmstart, 27, werden zunächst die Eingangsgrößen Differenzdruck Dp und Fahrgeschwindigkeit v ermittelt, 28. Nach Bestimmung der Windseitenkraft $F_W$ aus dem Differenzdruck Dp und einem Proportionalitätsfaktor $K_p$, 29, werden die Windseitenkraftwerte $F_W$ mittels eines $PT_1$-Algorithmus mit einer Glättungskonstante GF exponentiell geglättet, 30, und die Differenz $DF_{Wf}$ berechnet, 31.

Es wird geprüft, ob die Differenz der Windseitenkraftwerte $DF_{Wf}$ größer als der windseitenkraftabhängige Schwellwert $-Schw^*|F_{Wf,k-1}|$ ist, 33. Ist dies der Fall, so wird Einfahrt in eine Seitenwindböe erkannt und ein Schaltsignal (Flag) gesetzt: Flag = 1, 34 und der Wert der erfaßten Windseitenkraft $F_W$ und des Flag ausgegeben, 35, und das Programm beendet, 36.

Ist die Bedingung 32 nicht erfüllt, so wird die Ausfahrt des Fahrzeuges aus der Seitenwindböe erkannt, und das Schaltsignal (Flag) zurückgesetzt: Flag = 0, 37 und mit Programmschritt 35 fortgefahren.

Der exponentielle Glättungsfaktor GF und der Schwellenfaktor Schw werden so gewählt, daß sich der Zustand der Flag erst dann ändert, wenn eine signifikante Windseitenkraftänderung anliegt, die größer als diejenige ist, die durch hochfrequente Turbulenzen in Windböen hervorgerufen wird.

Der exponentielle Glättungsfaktor GF bestimmt die Tiefpaßgrenzfrequenz $f_0$ und wird mit

$$GF = 1 - \exp(-2\pi^*f_0{}^*DT) \qquad \text{(Gl. 2)}$$

berechnet, wobei DT das Zeitintervall zwischen (k-1)-tem und k-tem Rechenschritt ist.

Der erfindungsgemäße einfache und kostengünstige Aufnehmer ermöglicht es somit, den Einfluß von Seitenwind auf ein Fahrzeug ausreichend exakt zu erfassen, wobei insbesondere das fahrdynamisch unterschiedlich zu kompensierende Ein- und Ausfahren in eine / aus einer Seitenwindböe erkannt wird. Als Differenzdruckaufnehmer 22 kann ein herkömmlicher einfacher Druckgeber verwendet werden.

## Patentansprüche

1. Aufnehmer für ein Fahrzeug zur Erfassung des sich auf das Fahrverhalten des Fahrzeugs (1) auswirkenden Einflusses von Seitenwind, wobei gegenüberliegend an den Seiten des Fahrzeugs (1) Druckabnahmepunkte (18, 19) zur Messung des im Bereich der Karosserieaußenhaut anstehenden Luftdrucks angeordnet sind, wobei die Druckabnahmepunkte (18, 19) auf der Karosserieaußenhaut angebracht oder als Bohrungen (20, 21) in der Karosserieaußenhaut ausgeführt sind und ein einen Differenzdruck (Dp) mischen beiden Fahrzeugseiten erfassender Differenzdruckaufnehmer (22) zentral zwischen beiden Druckabnahmepunkten (18, 19) angeordnet ist, der mit den beiden Bohrungen (20, 21) über möglichst gleichlange Schläuche oder Rohrleitungen (23, 24) verbunden ist, dadurch gekennzeichnet, daß ein dem Differenzdruckaufnehmer (22) entnommenes, den Differenzdruck repräsentierendes Signal über fahrzeugtypabhängige und druckbohrungslageabhängige Korrekturwerte in ein aus dem Seitenwind resultierendes Windseitenkraftsignal umgewandelt wird.

2. Vorrichtung nach Anspruch 1, dadurch gekennzeichnet, daß die Druckabnahmepunkte (18, 19) symmetrisch zur senkrecht verlaufenden Längsebene des Fahrzeugs (1) an dessen Vorderbau angeordnet sind.

3. Vorrichtung nach Anspruch 2, dadurch gekennzeichnet, daß die Druckabnahmepunkte (18, 19) am linken und rechten vorderen Kotflügel des Fahrzeugs (1) angeordnet sind.

4. Vorrichtung nach Anspruch 2 oder 3, dadurch gekennzeichnet, daß die Druckabnahmepunkte (18, 19) derart angeordnet sind, daß sie selbst bei großen Beträgen des Winkels (alpha) zwischen Fahrzeuglängsachse und des Summenvektors ($v_{Res}$) aus Fahrgeschwindigkeitsvektor (v) und Windgeschwindigkeitsvektor ($v_W$) nicht in Gebieten abgelöster Luftströmung liegen.

5. Vorrichtung nach wenigstens einem der vorangehenden Ansprüche 1 bis 4, dadurch gekennzeichnet, daß das Druckaufnehmersystem (25, 15, 18 bis 24) so abgestimmt ist, daß seine Resonanzfrequenz oberhalb von etwa 5 Hertz liegt.

6. Vorrichtung nach wenigstens einem der vorangehenden Ansprüche, dadurch gekennzeichnet, daß eine dem Differenzdruckaufnehmer (22) nachgeschaltete Rechenschaltung (15) aus den Werten des gemessenen Differenzdrucks (Dp) den Anstieg und den Abfall einer Seitenwindböe erfaßt und in Abhängigkeit davon ein Schaltsignal (Flag) ausgibt.

7. Vorrichtung nach Anspruch 6, dadurch gekennzeichnet, daß die Rechenschaltung zur Erfassung des Einfahrens und des Ausfahrens des Fahrzeugs (1) in (aus) eine(-r) Seitenwindböe die Werte der berechneten Windseitenkraft ($F_{W,k}$) oder die erfaßten Werte des Differenzdrucks (Dp) mit einem Tiefpaß filtert und die Differenz der Beträge der zum augenblicklichen Zeitpunkt und zum Zeitpunkt der letzten Berechnung bestimmten gefilterten Windseitenkraftwerte ($|F_{Wf,k}|$, $|F_{Wf,k-1}|$) bildet und mit einem windseitenkraftabhängigen Schwellwert ($-Schw^*|F_{Wf,k-1}|$ oder $-Schw^*|F_{Wf,k}|$) vergleicht, wobei die Rechenschaltung
   - ein Einfahren in die Seitenwindböe erkennt, sofern die Differenz der gefilterten Windseitenkraftwerte größer als der windseitenkraftabhängige Schwellwert ist und
   - ein Ausfahren aus der Seitenwindböe erkennt, sofern die Differenz der gefilterten Windseitenkraftwerte kleiner als der windseitenkraftabhängige Schwellwert ist.

8. Vorrichtung nach Anspruchs 7, dadurch gekennzeichnet, daß die Filterung der Windseitenkraftwerte ($F_{Wf,k}$) durch einen Tiefpaß mit einer Grenzfrequenz im Bereich von 0,2 Hz erfolgt.

9. Vorrichtung nach Anspruch 7, dadurch gekennzeichnet, daß die Filterung der Differenzdruck- oder Windseitenkraftwerte $F_{Wf,k}$ durch exponentielle Glättung gemäß $F_{Wf,k} = GF^*F_{W,k} + (1-GF)^*F_{Wf,k-1}$ erfolgt.

## Claims

1. A sensor for a vehicle for the purpose of registering the effect of crosswind on the travel behaviour of the vehicle (1), pressure measuring points (18, 19) being positioned opposite each other on the sides of the vehicle (1) to measure the air pressure occurring in the region of the car body shell, the pressure measuring points (18, 19) being mounted on the car body shell or designed as drilled holes (20, 21) in the car body shell, and a differential pressure sensor (22) which registers a differential pressure (Dp) between the two vehicle sides being positioned centrally between the two pressure measuring points (18, 19) and being connected to the two drilled holes (20, 21) via hoses or pipes (23, 24) which are, as far as possible, of the same length, **characterised in that** a signal taken from the differential pressure sensor (22) and representing the differential pressure is converted into a windward force signal resulting from the crosswind via correction factors dependent on the vehicle model and on the position of the pressure holes.

2. Apparatus as claimed in Claim 1, **characterised in that** the pressure measuring points (18, 19) are positioned symmetrically to the perpendicular longitudinal plane of the vehicle (1) at the front thereof.

3. Apparatus as claimed in Claim 2, **characterised in that** the pressure measuring points (18, 19) are positioned on the left and right front wing of the vehicle (1).

4. Apparatus as claimed in Claim 2 or 3, **characterised in that** the pressure measuring points (18, 19) are positioned in such a way that, even where the angle (alpha) between the vehicle longitudinal axis and the vector sum ($v_{Res}$) of the travel speed vector (v) and wind speed vector ($v_W$) has high values, said pressure measuring points do not lie in areas of separated air flow.

5. Apparatus as claimed in at least one of the preceding claims 1 to 4, **characterised in that** the pressure sensor system (25, 15, 18 to 24) is tuned in such a way that its resonance frequency is above approximately 5 hertz.

6. Apparatus as claimed in at least one of the preceding claims, **characterised in that** a computer circuit (15) downstream of the differential pressure sensor (22) registers the increase and decrease in a gust of crosswind from the differential pressure (Dp) values measured and emits a switch signal (Flag) in dependence thereon.

7. Apparatus as claimed in Claim 6, **characterised in that**, for the purpose of registering vehicle (1) travel into and out of a gust of crosswind, the computer circuit filters the values of the calculated windward force ($F_{W,k}$) or the registered differential pressure (Dp) values with a low pass and forms the difference in the amounts of the filtered windward force values ($|F_{Wf,k}|$, $|F_{Wf,k-1}|$) determined at the particular moment and at the time of the previous calculation and compares them with a windward- force-dependent threshold value (-Schw*$|F_{Wf,k-1}|$ or -Schw*$|F_{Wf,k}|$), during which process the computer circuit
- recognises travel into the gust of crosswind where the difference in the filtered windward force values is greater than the windward-force-dependent threshold value and
- recognises travel out of the gust of crosswind where the difference in the filtered windward force values is smaller than the windward-force-dependent threshold value.

8. Apparatus as claimed in Claim 7, **characterised in that** the filtering of the windward force values ($F_{Wf,k}$) takes place by means of a low pass with a limit frequency in the region of 0.2 Hz.

9. Apparatus as claimed in Claim 7, **characterised in that** the filtering of the differential pressure or windward force values $F_{Wf,k}$ takes place by means of exponential smoothing in conformity with $F_{Wf,k} = GF*F_{W,k} + (1-GF)*F_{Wf,k-1}$.

**Revendications**

1. Capteur pour un véhicule destiné à détecter l'influence d'un vent latéral agissant sur le comportement du véhicule (1), dans lequel sont prévus en vis-à-vis, sur les côtés du véhicule (1), des points de prise de pression (18, 19) pour la mesure de la pression de l'air s'appliquant dans la zone de l'enveloppe extérieure de la carrosserie, dans lequel les points de prise de pression (18, 19) sont placés sur l'enveloppe extérieure de la carrosserie ou sont réalisés en tant que perçages (20, 21) dans l'enveloppe extérieure de la carrosserie et un capteur de pression différentielle (22), détectant une pression différentielle (Dp) entre deux côtés du véhicule, est placé au centre entre les deux points de prise de pression (18, 19), lequel capteur est relié aux deux perçages (20, 21) par des tuyaux ou des conduites tubulaires (23, 24) si possible de même longueur, caractérisé en ce qu'un signal prélevé du capteur de pression différentielle (22), représentant la pression différentielle, est converti, par des valeurs de correction dépendant du type du véhicule et de la position des perçages de pression, en un signal de force latérale du vent, résultant du vent latéral.

2. Dispositif selon la revendication 1, caractérisé en ce que les points de prise de pression (18, 19) sont placés à l'avant du véhicule (1), symétriquement à son plan longitudinal s'étendant verticalement.

3. Dispositif selon la revendication 2, caractérisé en ce que les points de prise de pression (18, 19) sont placés sur l'aile avant gauche et l'aile avant droite du véhicule (1).

4. Dispositif selon les revendications 2 ou 3, caractérisé en ce que les points de prise de pression (18, 19) sont placés de telle sorte que même en cas de grande valeur de l'angle (alpha) entre l'axé longitudinal du véhicule et le vecteur somme ($v_{Res}$) résultant du vecteur vitesse de marche (v) et du vecteur vitesse du vent ($v_W$), ils ne se situent pas dans des zones de courant d'air détaché.

5. Dispositif selon l'une au moins des revendications 1 à 4 précédentes, caractérisé en ce que le système de capteur de pression (25, 15, 18 à 24) est accordé de manière que sa fréquence de résonance soit supérieure à 5 Hz.

6. Dispositif selon l'une au moins des revendications précédentes, caractérisé en ce qu'un circuit de calcul (15), en aval du capteur de pression différentielle (22), enregistre, à partir des valeurs de la pression différentielle (Dp) mesurée, la montée et la chute d'un coup de vent latéral et délivre un signal de commutation (flag), en fonction de ceci.

7. Dispositif selon la revendication 6, caractérisé en ce que pour détecter l'entrée et la sortie du véhicule (1) dans une rafale de vent latéral et hors de celle-ci, le circuit de calcul filtre les valeurs de la force latérale du vent ($F_{W, k}$) calculées ou les valeurs détectées de la pression différentielle (Dp) avec un passe-bas et forme la différence des chiffres des valeurs de la force latérale du vent ($|F_{Wf, k}|$, $|F_{Wf, k-1}|$) filtrêes, déterminées à l'instant présent et à l'instant du dernier calcul et la compare à une valeur seuil -Schw*$|F_{Wf, k-1}|$) ou -Schw*$|F_{Wf, k}|$) dépendant de la force latérale du vent, le circuit de calcul
- détectant une entrée dans la rafale de vent latéral, si la différence des valeurs filtrées de la force latérale du vent est supérieure à la valeur seuil dépendant de la force latérale du vent et
- détectant une sortie de la rafale de vent latéral, si la différence des valeurs filtrées de la force latérale du vent est inférieure à la valeur seuil dépendant de la force latérale du vent.

8. Dispositif selon la revendication 7, caractérisé en ce que le filtrage des valeurs de la force latérale du vent ($F_{Wf, k}$) s'effectue au moyen d'un passe-bas avec une fréquence limite de l'ordre de 0,2 Hz.

9. Dispositif selon la revendication 75 caractérisé en ce que le filtrage des valeurs de la pression différentielle ou des valeurs de la force latérale du vent ($F_{Wf, k}$) s'effectue par lissage exponentiel selon $F_{Wf, k} = GF*F_{Wf, k} + (1 - FG)*F_{Wf, k-1}$.

FIG.1

$v_W$

$v_{Res}$

$v$

alpha

**FIG.2**

Start —27

$D_p$ , $v$ —28

$F_W := K_p \star D_p$ —29

$F_{Wf,k} = GF \star F_W + (1-GF) \star F_{Wf,k-1}$ —30

$DF_{Wf} = |F_{Wf,k}| - |F_{Wf,k-1}|$ —31

33

yes

$DF_{Wf} > -Schw \star |F_{Wf,k-1}|$

no

Flag=1 —34

Flag=0 —37

$F_W$ , Flag —35

**FIG.3**

End —36